# EUROPÄISCHE PATENTSCHRIFT

(11) **EP 2 383 491 B1**
(45) Veröffentlichungstag und Bekanntmachung des Hinweises auf die Patenterteilung: **03.04.2013**
(21) Anmeldenummer: 11006150.4
(22) Anmeldetag: 19.12.2007
(51) Int. Cl.: F16H 57/04, F16N 13/00, F04C 2/00

(54) **Getriebe mit Schmierölpumpe, Getriebe-Baureihe und Verfahren zum Herstellen von Varianten einer Getriebe-Baureihe**
Transmission with lubricant oil pump, series of transmissions and method for producing variants of a series of transmissions.
Engrenage doté d'une pompe de lubrifiant, gamme d'engrenages et procédé de fabrication de variantes d'une gamme d'engrenages

(30) Priorität: 26.01.2007 DE 102007004964
(43) Veröffentlichungstag der Anmeldung: 02.11.2011
(62) Teilanmeldung aus: 07856894.6
(73) Patentinhaber: Sew-Eurodrive GmbH & Co. KG, 76646 Bruchsal (DE)
(72) Erfinder: Grundel, Eugen, 76703 Kraichtal (DE)

(56) Entgegenhaltungen:
- WO-A-03/069192
- US-A- 5 211 262
- US-A- 5 228 355
- US-A1- 2004 108 169

## Beschreibung

Die Erfindung betrifft ein Getriebe mit Schmierölpumpe, eine Getriebe-Baureihe und ein Ver-fahren zum Herstellen von Varianten einer Getriebe-Baureihe.

Bei Getrieben wird zur Verminderung der Reibungswärme und als Verschleißschutz Schmierstoff eingefüllt, der bei niedrigem Ölstand trotzdem an Lager und Verzahnungen herangeführt werden muss.

Aus der DE 101 43 929 A1 ist eine Getriebesteuervorrichtung bekannt, bei dem an einen Drehmomentwandler ein zusätzlicher Zahnradsatz vorgesehen ist, über den eine Ölpumpe antreibbar ist.

Aus der DE 199 50 967 A1 ist eine Getriebebaueinheit und eine Steuerplattform für den Einsatz in einer Getriebebaueinheit bekannt, wobei eine elektronische und eine hydraulische Steuervorrichtung im Getriebegehäuse und in unmittelbarer Nähe angeordnet sind.

Aus der DE 101 23 194 A1 sind ein Plattformgetriebe und ein Getriebebaukasten bekannt, bei dem eine Versorgungseinheit eine Pumpeinrichtung umfasst.

Aus der US 3 029 661 ist eine Allzweck-Untersetzungseinheit bekannt, bei dem mit Bolzen befestigte Stahlplatten ein Getriebegehäuse bilden.

Aus der DE 197 17 422 A1 ist ein Durchflusswächter bekannt, bei welchem ein in dem Fließweg einer Hydraulikflüssigkeit angeordnetes Widerstandselement von einer ersten in eine zweite Stellung bewegbar ist und mit einem elektrischen Kontakt in Verbindung bringbar ist.

Aus der EP 0 342 183 A2 ist eine Schmiereinrichtung für Verteilergetriebe eines Kraftfahrzeuges bekannt, bei welcher wenigstens ein Losrad auf einer zugleich eine Schmiermittelpumpe treibenden Getriebeantriebswelle sitzt, wobei die Schmiermittelpumpe auf einer Seite des Getriebes fest vorgesehen ist, und bei welcher im Getriebegehäuse Fangtaschen für von den Zahnrädern abspritzendes Schmieröl vorgesehen sein, wobei oberhalb eine der Getriebeantriebswelle angeordnete Fangtasche über eine Längsbohrung und wenigstens eine Querbohrung mit einem Lager des bzw. der Losräder leitungsverbunden ist.

Aus der US 2004/0108169 A1 ist ein modularer Lagerkäfig mit integrierter Schmiermittelpumpe bekannt, wobei eine Achsanordnung ein Achsgehäuse und ein eine Pumpe aufnehmendes Pumpengehäuse umfasst, wobei das Pumpengehäuse mit dem Achsgehäuse zur Abdeckung einer Öffnung in dem Achsgehäuse verbindbar ist und eine die Pumpe antreibende Welle in dem Pumpengehäuse abgestützt ist.

Aus der EP 0 045 864 A2 ist ein nachrüstbares getriebenes Schmiersystem bekannt, bei welchem eine Pumpe einen Pumpenkörper mit einer Schnittstelle hat, welche Schnittstelle identisch zu der Schnittstelle eines abnehmbaren Deckels ausgebildet ist, wobei die Pumpe statt des Deckels montiert und in Antriebsverbindung mit einer hinter dem Deckel angeordneten Welle gebracht werden kann. Die Pumpe weist einen Pumpeneingang und einen Pumpenausgang zum Anschluss einer externen Verrohrung auf.

Aus der US 2002/0032093 A1 ist eine Übersetzungssteuerungsmaschine bekannt, bei dem eine Schmiermittelpumpe einen Druckausgang aufweist, welcher in axiale Richtung in Bezug auf die Achse der Welle der Schmiermittelpumpe weist, und welcher an eine externe Verrohrung mit einem externen Ölkreislauf verbindbar ist.

Aus der WO 03/069192 A1 ist ein Schmiervorrichtung für Stufengetriebe bekannt, bei welcher eine Ölpumpe innerhalb eines Getriebegehäuses auf den gegenüberliegenden Enden einer Zwischenwelle montierbar ist, wobei die Ölpumpe so weit entfernt von den Wänden des Getriebegehäuses angeordnet wird, dass sie auch bei größerer Fahrzeugneigung Öl und nicht Luft saugt.

Aus der US 5 211 262 A ist ein Getriebe nach dem Obeibegriff von Anspruch 1 bekannt, wobei eine Welle des Getriebes eine die Schmierölpumpe antreibende Welle ist. Zwei interne Anschlüsse erster Art und ein interner Anschluss zweiter Art haben Öffnungen, die auf das Getriebegehäuse hin weisen.

Aus der WO 03/069192 A1 ist eine Getriebe-Baureihe nach dem Oberbegriff von Anspruch 13 bekannt.

Der Erfindung liegt die Aufgabe zugrunde, eine Schmierölpumpe vorzuschlagen, welche mit einer Vielzahl an unterschiedlichen Anschlüssen in unterschiedlichen Positionen mit dem Getriebe verbunden werden kann.

Erfindungsgemäß wird die Aufgabe bei dem Getriebe nach den in Anspruch 1, bei der Getriebe-Baureihe nach den in Anspruch 13 und bei dem Verfahren zum Herstellen von Varianten einer Getriebe-Baureihe nach den in Anspruch 15 angegebenen Merkmalen gelöst.

Wichtige Merkmale der Erfindung eines Getriebes mit einer Schmierölpumpe sind in Anspruch 1 angegeben. Insbesondere ist somit vorgesehen, dass die Schmierölpumpe von einer Welle des Getriebes direkt angetrieben wird, insbesondere koaxial zu einer Welle angeordnet ist, die von einer Stufe des Getriebes umfasst wird, insbesondere von dem Getriebestrang umfasst ist, der eine eintreibende und eine abtreibende Welle des Getriebes verbindet. Von Vorteil ist dabei, dass aufwendige Mechanik zum Antrieb der Schmierölpumpe, kurz Pumpe, einsparbar ist und eine separater Pumpenantrieb verzichtbar ist. Somit ist die Pumpe robust gegen funktionshindernde Beschädigungen, und eine zusätzliche elektrische Versorgung oder ein externer Anschluss an einen Kühlkreislauf kann entfallen.

Bei einer vorteilhaften Ausgestaltung ist die Schmierölpumpe an einem Gehäusedeckel des Getriebes montiert, wobei der Gehäusedeckel ein Lager für die Welle des Getriebes zumindest teilweise abdeckt. Beispielsweise ist die Pumpe mit ihrem Pumpenflansch am Getriebe verbunden, wobei insbesondere die Welle der Pumpe koaxial mit einer Getriebewelle angeordnet ist. Somit ist vorteilhaft eine robuste Befestigung der Pumpe am Getriebe vornehmbar.

Bei einer vorteilhaften Ausgestaltung ist die Welle des Getriebes die eintreibende Welle oder die erste Zwischenwelle. Von Vorteil ist dabei, dass bei einem Getriebe mit Untersetzung eine hohe Drehzahl für die Pumpe verfügbar ist. Von Vorteil ist weiterhin, dass die Pumpe keinen eigenen Antrieb benötigt, also passiv arbeitet und nur bei Betrieb des Getriebes auch Schmieröl bewegt.

Bei einer vorteilhaften Ausgestaltung ist die Schmierölpumpe über den Gehäusedeckel an ein Verrohrungssystem des Schmierölkreislaufs angeschlossen. Eine externe, also außerhalb des Getriebegehäuses verlaufende, Verrohrung ist damit konsequent vermeidbar. Somit ist sogar die Anschluss-Verrohrung der Pumpe sicher geschützt ausführbar.

Bei einer vorteilhaften Ausgestaltung ist die Pumpe mit einem Verteiler verbunden, an welchem zumindest ein erster Sensor verbunden ist. Vorzugsweise ist ein Sensor mittels elektrischer Leitungen mit einer elektronischen Schaltung, insbesondere zum Auswerten der Sensorsignale, verbunden. Somit ist in kompakter Bauweise ein Mittel zur Überwachung der Pumpenfunktion und/oder des Pumpenzustands bereitgestellt. Eine Fernüberwachung ist vorsehbar, indem der Sensor elektronisch ausgelesen wird. Von Vorteil ist dabei, dass die Auswertung der Signale in geschützter Umgebung, wie Schaltschrank, erfolgen kann. Alternativ sind auch Sensoren verwendbar, die mit integrierter elektronischer Schaltung ausgeführt sind.

Bei einer vorteilhaften Ausgestaltung ist der erste Sensor ein Durchflusswächter und/oder ein Druckschalter. Mit einem Durchflusswächter ist nicht nur die Funktion der Pumpe, sondern zusätzlich die Funktion der Verrohrung überwachbar. Ein Druckschalter ist eine kostengünstige Vorrichtung zur zumindest binären Überwachung der Pumpenfunktion und der Durchlässigkeit der Verrohrung.

Bei einer vorteilhaften Ausgestaltung ist am Verteiler ein Filter und/oder ein zweiter Sensor, insbesondere zur Filterüberwachung, angeschlossen. Somit ist vorteilhaft Filterfunktion und Pumpfunktion in einer kompakten Vorrichtung bereitgestellt. Ferner ist selbst die Ölfilterung robust und kostengünstig überwachbar. Von Vorteil ist weiterhin, dass das Öl durch das Filter gereinigt werden kann und die Reinigungsfähigkeit des Filters überwachbar ist, insbesondere ist das Zusetzen des Filters detektierbar. Vorzugsweise umfasst das Filter ein Vlies.

Insgesamt ist mit der Erfindung eine Pumpe für einen Ölkreislauf bereitgestellt, die robust ist, eine geringe Ausfallrate aufweist, deren Funktion überwachbar ist und die keine zusätzliche Energieversorgung benötigt.

Bei einer vorteilhaften Ausgestaltung ist mindestens ein Sauganschluss und mindestens ein Druckanschluss der Pumpe mit dem im Inneren des Getriebes vorgesehenen Rohrleitungssystem verbunden. Somit ist die Pumpe an einer internen Verrohrung verwendbar, wobei intern hier und im folgenden im des von der Außenhaut des Getriebegehäuses umschlossenen Raumbereichs gelegen bezeichnet, also beispielsweise im Getriebeinneren oder in der Getriebewandung. Von Vorteil ist dabei, dass die Pumpe das Schmieröl ansaugen kann und am Druckausgang ins Rohrleitsystem einpressen kann. Dieses leitet dann das Öl, insbesondere mittels Rohrverteilern, an die gewünschten Raumbereiche, insbesondere Schmierstellen. Durch die Ausbildung der Anschlüsse sind die Vorteile einer internen Rohrführung, also der Schutz gegen Beschädigung und ein kompaktes Baumaß, auch für die Pumpe als Teil des Ölkreislaufs nutzbar. Von Vorteil ist insbesondere, dass keine Ölleitungen im äußeren Bereich um das Getriebe herum vorhanden sind und somit auch nicht verletzbar sind. Die kompakte Einheit aus Verteiler und Pumpe mit Sensor ist robust. Außerdem ist das Getriebe auf diese Weise mit einer Pumpe verbindbar, die an ihrer Oberfläche, beispielsweise einem als Getriebedeckel ausgebildeten Gehäusedeckel, vorsehbar ist.

Bei einer vorteilhaften Ausgestaltung weist oder zeigt der Druckausgang in axiale Richtung in Bezug auf die Achse der Pumpenwelle. Mit weisen ist hier und im folgenden die Richtung einer Normalen gemeint, die durch einen in etwa kreisförmigen Teil einer Ebene definiert wird, wobei der kreisförmige Teil durch die Öffnung der Druckausgangs berandet wird. Der Richtungssinn dieses Weisens ist als von innen nach außen an der Pumpe zu verstehen.

Bei einer vorteilhaften Ausgestaltung weist die Schmierölpumpe eine Pumprichtung auf, die unabhängig vom Drehsinn der Welle der Schmierölpumpe ist. Unter Pumprichtung ist die Fließrichtung des Schmieröls zwischen den Ausgängen, also Anschlüssen, der Schmierölpumpe zu verstehen. Die Pumpe ist somit auf einer Welle des Getriebes montierbar, die im Betrieb in beiden Drehsinnen arbeitet. Die Förderrichtung oder Pumprichtung ist dabei unabhängig von dem Drehsinn der antreibenden Welle, also drehsinninvariant. Dies ist vorteilhaft durch eine Ventiltechnik an den Anschlüssen der Pumpe oder durch eine mechanische Umschaltvorrichtung in der Pumpe oder auf anderem Wege, beispielsweise mittels Kolbenpumpen, erreichbar.

Bei einer vorteilhaften Ausgestaltung weist die Pumpe einen ersten Anschluss erster Art und einen zweiten Anschluss erster Art auf, insbesondere zum Anschluss einer Ölkreislauf-Verrohrung, die derart symmetrisch zueinander angeordnet sind, dass bei Montage der Pumpe auf einer ersten Seite des Getriebes der erste Anschluss erster Art mit dem im Getriebeinneren vorgesehenen Rohrleitungssystem verbunden ist, wobei der zweite Anschluss erster Art verschlossen ist, und dass bei Montage der Pumpe auf einer zweiten Seiten des Getriebes der zweite Anschluss erster Art mit dem im Getriebeinneren vorgesehenen Rohrleitungssystem verbunden ist, wobei der erste Anschluss erster Art verschlossen ist. Vorzugsweise weist die Pumpe zusätzlich einen Anschluss zweiter Art auf, der bei Montage der Pumpe auf jeder der beiden Seiten jeweils mit dem im Getriebeinneren vorgesehenen Rohrleitungssystem verbunden ist. In einer vorteilhaften Ausgestaltung sind die Anschlüsse erster Art als Druckanschlüsse ausgebildet, während der Anschluss zweiter Art als Sauganschluss ausgebildet ist. In einer alternativen, vorteilhaften Ausgestaltung sind die Anschlüsse erster Art als Sauganschlüsse ausgebildet, während der Anschluss zweiter Art als Druckanschluss ausgebildet ist. Beide Alternativen haben für sich den Vorteil, dass dieselbe Pumpe auf zwei Seiten des Getriebes montierbar ist. Dies erhöht die Variantenvielfalt, in der das Getriebe fertigbar ist. Durch die Ausbildung zweier Druckanschlüsse in der einen Ausgestaltung ist eine Pumpe bereitgestellt, bei der in beiden Montagepositionen immer der oberen Anschluss ein Sauganschluss ist, während der untere Anschluss ein Druckanschluss ist. Ein analoger Vorteil ergibt sich aus der alternativen Ausgestaltung.

Somit kann der robustere Sauganschluss im abhebbaren Teil eines Getriebegehäuses angeordnet werden, während der mit Druck beaufschlagte und daher empfindlichere Druckanschluss mit Verrohrung geschützt angeordnet werden kann.

Bei einer Alternative weist die Pumpe zwei Anschlüsse erster Art auf, die derart symmetrisch angeordnet sind, dass bei Montage der Pumpe auf der gegenüberliegenden Seite des Getriebes ein Anschluss erster Art verschlossen ist und der jeweils andere Anschluss erster Art für das Verbinden mit dem im Getriebeinneren vorgesehenen Rohrleitungssystem vorgesehen ist. Die Anschlüsse erster Art sind in vorteilhaften Ausgestaltungen entweder beide als Druckanschluss oder beide als Sauganschluss ausgebildet. Von Vorteil ist bei beiden Ausgestaltungen jeweils, dass zusätzlich zu den Sauganschlüssen ein Druckanschluss bzw. zusätzlich zu den Druckanschlüssen ein Sauganschluss vorsehbar ist, und dass insbesondere bei einer 180° Symmetrie die relativen Höhen der jeweils verwendeten Saug- und DruckAnschlüsse zueinander auch bei Verwendung der Pumpe auf der gegenüberliegenden Seite gleich bleiben und somit das Rohrleitungssystem nur geringfügig abgeändert werden muss. Außerdem bleibt die Montagereihenfolge gleich, wie auch die sonstigen Rahmenbedingungen.

Bei einer vorteilhaften Ausgestaltung sind erste und zweite Seite des Getriebes gegenüberliegende Seiten des Getriebes. Vorzugsweise ist somit die Pumpe bei Montage auf der ersten Seite und auf der zweiten Seite mit derselben Welle verbunden. Es macht somit keinen Unterschied für die Leistung, insbesondere die Drehzahl, der Pumpe, auf welcher Seite des Getriebes die Pumpe montiert wird, und die Auswahl kann sich allein an dem verfügbaren Platz orientieren.

Bei einer vorteilhaften Ausgestaltung ist die Pumpe über einen Gehäusedeckel mit dem Getriebe verbunden, wobei die Pumpe durch den Gehäusedeckel mit einem internen Ölkreislauf im Getriebegehäuse verbindbar ist. Alternativ oder zusätzlich ist die Pumpe über eine externe Verrohrung mit einem externen Ölkreislauf verbindbar. Somit ist eine erhöhte Flexibilität bei der Auswahl der Einsatzmöglichkeiten für die Pumpe ermöglicht.

Bei einer vorteilhaften Ausgestaltung weist die Pumpe zwei interne Druckanschlüsse auf, deren Öffnungen auf das Getriebegehäuse hin weisen, zwei externe Druckanschlüsse, deren Öffnungen parallel zur Gehäuseoberfläche weisen, einen internen Sauganschluss, dessen Öffnung auf das Getriebegehäuse hin weist, und einen externen Sauganschluss, dessen Öffnung parallel zur Gehäuseoberfläche weist. Vorzugsweise weisen die internen Anschlüsse der Pumpe in axiale Richtung in Bezug auf die Pumpenwelle und die externen Anschlüsse der Pumpe in radiale Richtung in Bezug auf die Pumpenwelle. Somit sind die externen Anschlüsse einfach und platzsparend mit einer externen Verrohrung verbindbar, die entlang, als parallel zu, der Oberfläche des Getriebegehäuses geführt ist. Dabei beranden die Anschlussöffnungen ebene Flächen, deren Normalen die Richtung des jeweiligen Weisens definieren.

Die Begriffe intern und extern beziehen sich auf das Getriebegehäuse: Die externe Verrohrung ist außerhalb des Gehäuses angeordnet, während die interne Verrohrung im Inneren des Getriebes oder in der Wandung des Getriebegehäuses angeordnet ist.

Wichtige Merkmale bei der Erfindung einer Getriebe-Baureihe sind Gegenstand von Anspruch 11. Insbesondere ist somit vorgesehen, dass Varianten umfasst sind, wobei in einer ersten Variante eine Schmierölpumpe an einem ersten Ende einer Getriebewelle angeordnet ist und durch die Getriebewelle angetrieben wird, und in einer zweiten Variante die Schmierölpumpe an einem zweiten Ende der Getriebewelle angeordnet ist und durch diese Getriebewelle angetrieben wird, wobei die Schmierölpumpe jeweils an ein Verrohrungssystem für Schmieröl im Getriebeinneren angeschlossen ist.

Bei einer vorteilhaften Ausgestaltung ist in einer ersten Variante eine Schmierölpumpe an einem Deckel des Getriebegehäuses vorgesehen, wobei der Deckel ein Lager einer Getriebewelle, insbesondere der eintreibenden Welle, abdeckt und die Pumpe über den Deckel an ein Verrohrungssystem im Getriebeinneren angeschlossen ist, und wobei in einer zweiten Variante eine Schmierölpumpe an einem Deckel des Getriebegehäuses vorgesehen ist und die Pumpe baugleich zur Schmierölpumpe der ersten Variante ist, wobei die Schmierölpumpe an ein externes Verrohrungssystem angeschlossen ist. Von Vorteil ist dabei, dass an ein externes Verrohrungssystem beispielsweise eine Kühlvorrichtung und/oder einer Filtereinrichtung anschließbar ist.

Bei einer vorteilhaften Ausgestaltung ist in einer ersten Variante das Getriebegehäuse in monobloc-Bauweise ausgeführt und in einer zweiten Variante das Getriebegehäuse mindestens zweiteilig, wobei in beiden Varianten eine interne Ölkreislauf-Verrohrung vorgesehen ist und wobei die Getriebegehäuse der beiden Varianten im Wesentlichen identisch ausgeformt sind. Die Unterschiede zwischen beiden Gehäusen sind also nur durch die zweiteilige Ausführung einer Variante begründet. Somit können für eine Vielzahl von Ausformungen, Bohrungsflächen, Flanschflächen, Lagerschalen usw. Fertigungsschritte vereinheitlicht werden, und Fertigungswerkzeug ist einsparbar. Je nach Anwenderanforderungen ist die stabilere monobloc-Variante oder die leichter bei Wartung zugängliche zweiteilige Variante auswählbar. Insbesondere ist bei der monobloc-Variante eine Ausformung vorsehbar, aus der durch Aufschneiden oder Trennen die gegenseitig passenden Flansche der Gehäuseteile des Gehäuses fertigbar sind.

Bei einer vorteilhaften Ausgestaltung sind axial verschieden lange Pumpen am Pumpenflansch verbindbar. Somit ist die Variantenvielfalt der Baureihe nochmals gesteigert. Es sind verschiedene Filtergrößen und/oder verschiedene Pumpenleistungen, insbesondere Durchflussmengen, verfügbar. Insbesondere ist vorteilhaft eine Baureihe von Pumpen verwirklichbar, indem einzelne Bauteile der Pumpe, beispielsweise das Filtergehäuse, der Verteiler und/oder das Pumpengehäuse, variiert werden. Vorzugsweise ist ein Flansch vorgesehen, der mit dem Getriebe verbindbar ist und auf den verschieden lange Gehäuse der Pumpe aufsetzbar sind. Somit ist eine Schnittstelle geschaffen, die eine hohe Varianz von Pumpen bei Verwendung immer desselben Flansches ermöglicht.

### Bezugszeichenliste

1, 10 Pumpe
2, 14 erster Sensor
3, 13 zweiter Sensor
4, 11 Verteilerflansch
5, 12 Filter
15 Getriebe
16,21 Gehäusedeckel
22, 23 Bohrung
24 Welle
25 Bohrung
30 Pumpe
31 Flanschplatte
32 Pumpenflansch
32a Pumpenflansch in erster Bauform
32b Pumpenflansch in zweiter Bauform
34a erster externer Druckanschluss
34b zweiter externer Druckanschluss
36 externer Sauganschluss
38 Entlüftungsbohrloch
39 Verteiler
40 Filter
42 Filterüberwachung
44 Sensoranschluss
46 Ölablassschraube
48 Ölablassschraube
49 Pumpendeckel
50 Pumpenwelle
52 Bohrung
54 interner Sauganschluss
56a erster interner Druckanschluss
56b zweiter interner Druckanschluss
58 Verbindungskanal
60 Verbindungskanal
62 Befestigungsschraube
64 Schraubenloch
70a Pumpe in erster Bauform
70b Pumpe in zweiter Bauform
72 Zwischenraum
80 Richtung des Schwerefelds der Erde
601 obere Gehäuseschale
602 untere Gehäuseschale
603 erste Welle
604 zweite Welle
605 dritte Welle
606 erstes Lager
607 zweites Lager
608 drittes Lager
609 viertes Lager
610 erstes Zahnrad
611 zweites Zahnrad
612 drittes Zahnrad
613 viertes Zahnrad
620 Pumpe
621 Saugrohr
622 Ölsumpf
623 Druckrohr
624 Verrohrungsverteiler
625 erstes Versorgungsrohr
626 zweites Versorgungsrohr
627 drittes Versorgungsrohr
628 Düse

Die Erfindung wird nun anhand von Abbildungen näher erläutert:

Es zeigt
- Figur 1 ein Getriebegehäuse mit montierter Schmierölpumpe,
- Figur 2 eine Prinzipskizze einer Schmierölpumpe mit Filter und Sensoren,
- Figur 3 eine Schmierölpumpe mit Pumpenflansch und Filter,
- Figur 4 eine teilweise Explosionsdarstellung der Schmierölpumpe aus Figur 3,
- Figur 5 unterschiedliche Bauformen der Schmierölpumpe aus Figur 3 und
- Figur 6 eine Prinzipskizze eines Getriebes mit Schmierölpumpe und Ölkreislauf-Verrohrung.

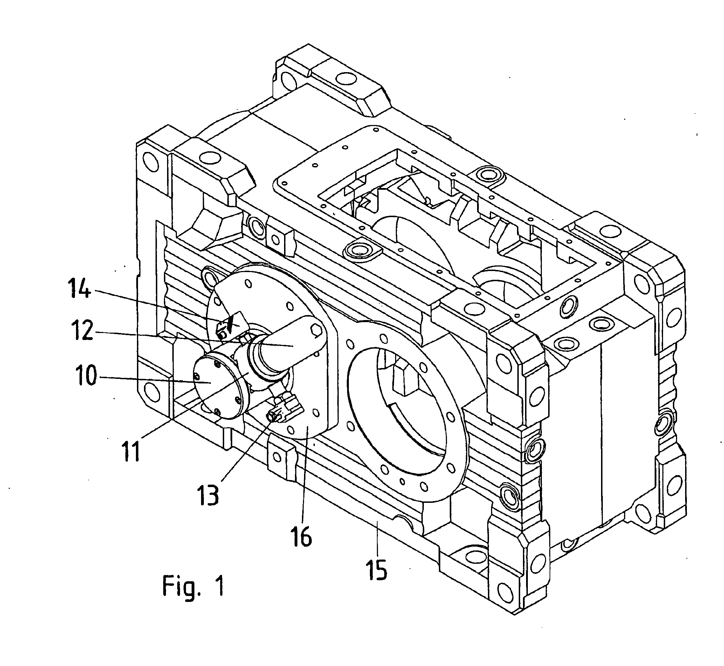

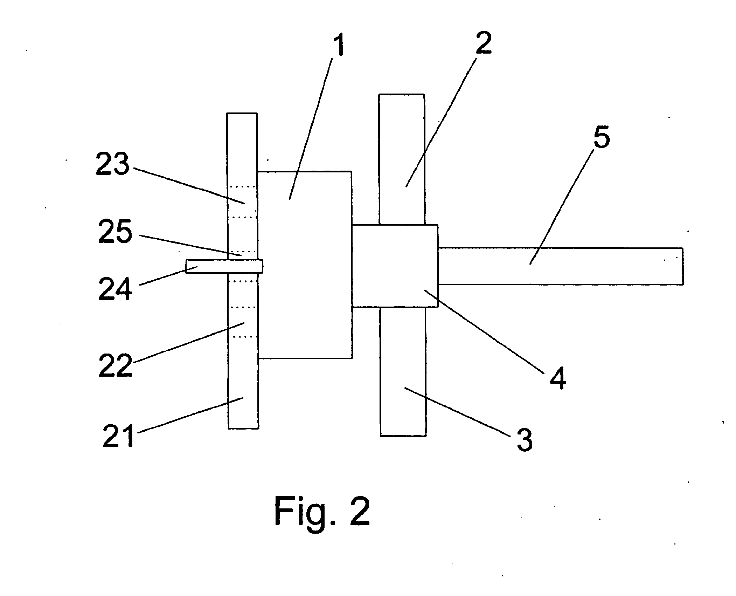

In der Figur 2 ist ein erfindungsgemäßes System symbolisch gezeigt. In Figur 1 ist ein konkretisiertes System an einem Getriebe gezeigt.

Vorteilhaft ist, dass keine Ölleitungen im Außenbereich des Getriebes um das System herum vorzusehen sind. Denn das System wird an einem Getriebedeckel 16 eingebracht und mit dem Rohrleitungssystem des Getriebeinneren verbunden durch diesen Getriebedeckel 16 hindurch verbunden.

Das System ist in Figur 2 dargestellt. Eine Pumpe 1 ist an einem Gehäusedeckel 21 eines Getriebegehäuses montiert. Die Pumpe 1 saugt Öl an ihrem Sauganschluss über eine Bohrung 22 und drückt dieses heraus an ihrem Druckausgang über eine Bohrung 23, zurück in das Getriebeinnere. Der an der Pumpe 1 vorgesehen Verteilerflansch 4 erübrigt weitere äußere Druckleitungen und ermöglicht das direkte Anschließen von Sensoren und Filtern. Die Pumpe 1 ist mit einer Welle 24 des Getriebes verbunden, die durch eine Bohrung 25 im Gehäusedeckel 21 hindurch die Pumpe 1 antreibt. In der Endfläche der Pumpenwelle sind auf einem Durchmesser der Welle zwei nicht gezeigte, axial ausgerichtete Stifte angeordnet, die in entsprechend ausgebildete Bohrungen in der Getriebewelle 24 eingreifen und somit eine Formschluss zum Antrieb der Pumpe 1 bewirken.

Insbesondere ist ein erster Sensor 2 und ein zweiter Sensor 3 vorgesehen, wobei der erste beispielhaft als Durchflusswächter und der zweite als Filterüberwachung ausgeführt ist, der die Funktionstüchtigkeit des ebenfalls an den Verteilerflansch 4 angeschlossenen Filters 5 überwacht. Wenn das Filter zunehmend verstopft ist, gibt dieser zweite Sensor 3 also ein entsprechendes Signal ab an eine verbundene elektronische Schaltung.

Der Sensor 3 vergleicht den Öldruck des ins Filter 5 einströmenden Öls mit dem aus diesem herausströmenden Öl. Übersteigt die Druckdifferenz einen kritischen Wert, wird das Signal ausgelöst oder der Wert gemeldet. Alternativ wird der Wert ständig gemessen und in regelmäßigen Zeitabständen an eine übergeordnete elektronische Schaltung gemeldet.

Der Sensor 2 detektiert den Durchfluss und meldet die Werte an eine übergeordnete elektronische Schaltung oder er löst ein Signal aus, wenn der Durchfluss unter einen kritischen Wert fällt.

In Figur 1 sind die in Figur 2 genannten Teile konkretisiert ausgeführt und an ein Getriebe verbunden.

Die Pumpe 10 ist also nun als kompakte Einheit ausgeführt und kann direkt an ein Getriebe angeschlossen werden. Es entfallen externe Leitungen, die empfindlich sein können.

Der erste Sensor 14 und der zweite Sensor 13 sind am Verteilerflansch 11 vorgesehen, an dem auch das Filter 12 vorgesehen ist. Das Getriebe 15 weist also einen Gehäusedeckel 16 auf, in welchem das System einbaubar ist. Im Gegensatz zur Figur 2 sind in Figur 1 Verteilerflansch 11, Sensoren (13, 14) und Filter 12 in etwa in einer Ebene angeordnet, die parallel zu der Gehäusewand verläuft.

In weiteren erfindungsgemäßen Ausführungsbeispielen sind als Sensoren Vorrichtungen vorgesehen, die nach anderen Messprinzipien arbeiten.

In weiteren erfindungsgemäßen Ausführungsbeispielen sind die bloßen Sensoren mittels elektrischer Leitungen mit jeweiligen Auswerteschaltungen verbunden, die entfernt vom Getriebe vorgesehen sind, beispielsweise im Schaltschrank.

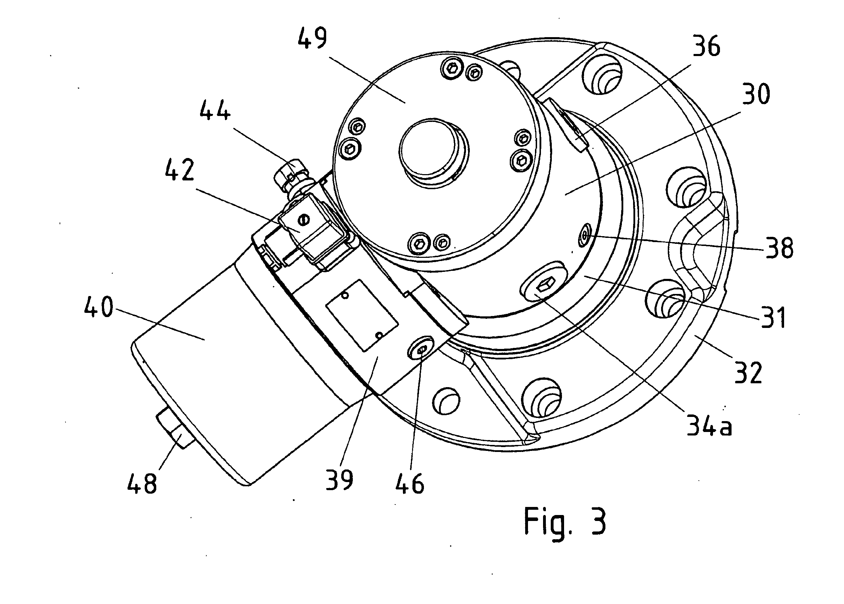

Figur 3 zeigt ein weiteres erfindungsgemäßes Ausführungsbeispiel. Eine Pumpe 30 ist über eine Flanschplatte 31 mit einem Pumpenflansch 32 verbunden. Der Pumpenflansch ist auf einem nicht gezeigten Getriebedeckel angebracht. Das Gehäuse der Pumpe 30 weist einen ersten externen Druckanschluss 34a, einen zweiten externen Druckanschluss 34b, einen externen Sauganschluss 36 und eine Entlüftungsbohrung 38 auf, die jeweils mittels Schrauben verschlossen sind. Ein Pumpendeckel 49 schließt die Pumpe 30 axial ab.

Die Begriffe extern und intern beziehen sich auf die Möglichkeit eines Anschlusses an eine externe, also außerhalb eines Getriebes gelegenen, Verrohrung bzw. einer internen, also innerhalb eines Getriebes oder in der Wandung das Gehäuses angeordneten.

Mit der Pumpe 30 ist ein Verteiler 39 verbunden, an dem ein Filter 40, ein Anschluss zur Filterüberwachung 42 und ein Sensoranschluss 44 für einen Durchflusswächter angebracht sind. Eine Ölablassschraube 46 verschließt eine Ölablassbohrung. Eine weitere Ölablassschraube 48 ist am Filter 40 vorgesehen.

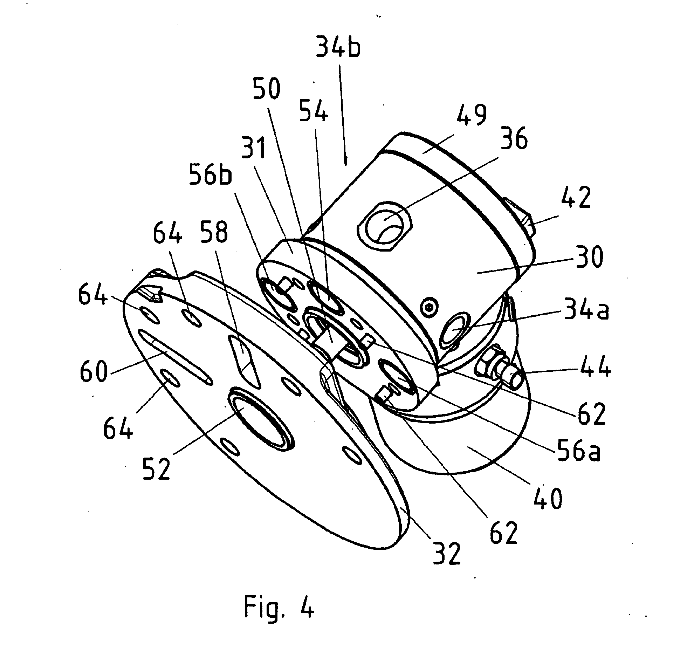

Figur 4 zeigt eine andere Ansicht desselben Ausführungsbeispiels in teilweiser Explosionsdarstellung. Die Pumpenwelle 50 der Pumpe 30 ist im montierten Zustand durch einen Bohrung 52 mit einer Getriebewelle verbunden. Diese Getriebewelle ist vorzugsweise die eintreibende Getriebewelle.

Die Flanschplatte 31 weist einen internen Sauganschluss 54, einen ersten internen Druckanschluss 56a und einen zweiten internen Druckanschluss 56b auf. Der interne Sauganschluss 54 wird bei Aufsetzen der Flanschplatte 31 auf den Pumpenflansch 32 mit einer Bohrung zur Deckung gebracht, die in einen Verbindungskanal 58 mündet. Der erste interne Druckanschluss 56a wird bei Aufsetzen der Flanschplatte 31 auf den Gehäusedeckel 32 mit einer Bohrung zur Deckung gebracht, die in einen Verbindungskanal 60 mündet. Der zweite interne Druckanschluss 56b wird bei Aufsetzen der Flanschplatte 31 auf den Pumpenflansch 32 durch den Pumpenflansch 32 dicht verschlossen. Der Pumpenflansch 32 ist auf einem nicht gezeigten Getriebedeckel montiert. Die Verbindungskanäle (58, 60) münden durch diesen in eine Ölumlauf-Verrohrung, deren Enden in zu den Verbindungskanälen (58, 60) passende Bohrungen eingerollt sind.

Die Verbindungskanäle (58, 60) sind somit mit Anschlüssen einer internen Verrohrung im Getriebegehäuse verbindbar. Durch die langlochförmige Ausbildung der Verbindungskanäle (58, 60) ist ein und der derselbe Pumpenflansch 32 auf verschiedene Getriebegehäuse, insbesondere verschiedene Getriebedeckel, die sich durch den relativen Abstand der Verrohrungsanschlüsse unterscheiden, montierbar. Somit ist ein und derselbe Pumpenflansch an verschiedenen Getriebegrößen, die sich insbesondere durch ihre Lagerdurchmesser voneinander unterscheiden, einsetzbar.

Befestigungsschrauben 62 sichern die Flanschplatte 31 relativ zum Pumpenflansch 32 gegen ein Verdrehen und fixieren die Pumpe 30 auf dem Pumpenflansch 32.

Über Schraubenlöcher 64 ist der Pumpenflansch 32 mittels Schrauben mit dem Getriebegehäuse verbindbar.

Über einen externen Sauganschluss 36 und einen ersten externen Druckanschluss 34a ist ein zumindest teilweise außerhalb des Getriebegehäuses verlaufender Ölkreislauf anschließbar. Ein solcher externer Anschluss ist insbesondere erforderlich, wenn eine zusätzliche Ölkühlung erforderlich ist. Zum Anschluss einer externen Verrohrung wird jeweils die in Fig. 3 gezeigte Verschlussschraube herausgenommen.

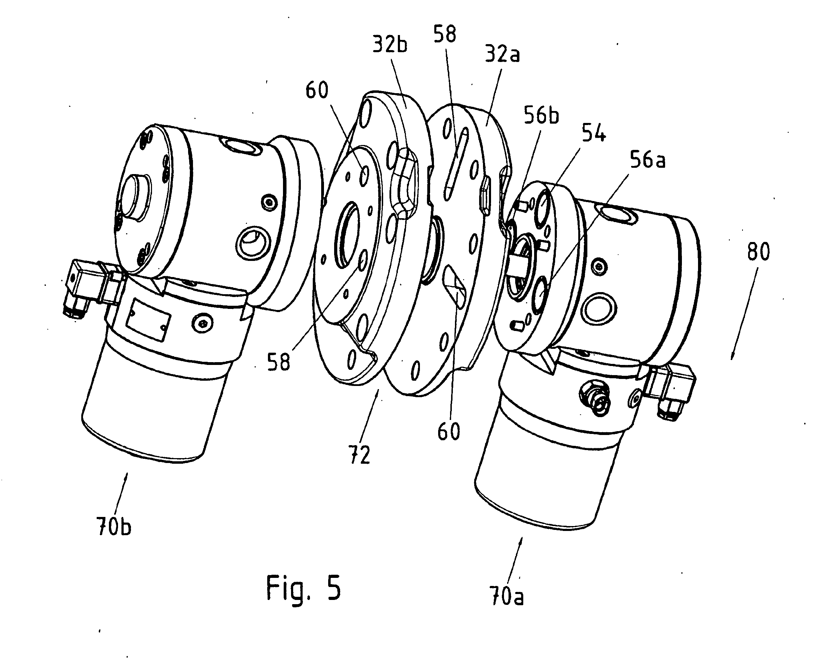

Figur 5 zeigt das Prinzip der zweiseitigen Montage der Wellenpumpe mit Filter. Das Getriebegehäuse ist gedanklich zwischen dem Pumpenflansch in erster Bauform 32a und dem Pumpenflansch in zweiter Bauform 32b im Zwischenraum 72 anzuordnen.

Unter Bauform eines Gegenstandes wird in dieser Schrift die Orientierung zweier, vorzugsweise senkrecht aufeinander stehender, mathematisch-gedachter, im Gegenstand in Arbeitsposition angeordneter Achsen bezüglich des als homogen genäherten Schwerefelds der Erde verstanden. Beispielsweise sind derartige Achsen bei einem Getriebe durch die Richtung der eintreibenden Welle und eine senkrecht auf dieser und einer Gehäusewand stehenden Achse gegeben. Beispielsweise sind derartige Achsen bei einer Pumpe mit Filter nach Figur 3 durch die Richtung der Pumpenwelle und die Symmetrieachse des Filters gegeben.

In einer ersten Bauform ist die Pumpe 70a mit dem Pumpenflansch 32a derart verbunden, dass ein erster Verbindungskanal 58 im Pumpenflansch 32a mit dem internen Sauganschluss 54 der Pumpe 70a verbunden ist, dass ein zweiter Verbindungskanal 60 im Gehäusedeckel 32a mit dem ersten internen Druckanschluss 56a und dass der zweite interne Druckanschluss 56b durch den Gehäusedeckel 32a dicht verschlossen wird.

In einer zweiten Bauform ist die Pumpe 70b mit dem Pumpenflansch 32b derart verbunden, dass der zweite Verbindungskanal 60 im Pumpenflansch 32b mit dem internen Sauganschluss 54 der Pumpe 70a verbunden ist, dass der erste Verbindungskanal 58 im Pumpenflansch 32a mit dem zweiten internen Druckanschluss 56b und dass der erste interne Druckanschluss 56a durch den Pumpenflansch 32b dicht verschlossen wird.

Die Verbindungskanäle (58, 60) sind mit je einem Anschlussrohr der internen Verrohrung des Getriebes verbunden.

Somit wird in beiden Bauformen mit demselben Pumpenflansch (32a, 32b) und derselben Pumpe (70a, 70b) der Sauganschluss 54 jeweils mit dem bezüglich des Schwerefelds der Erde 80 oberen Anschlussrohr der internen Verrohrung verbunden. Somit sind unterschiedliche Bauformen mit einem reduzierten Teilesortiment bereitstellbar.

Wie in Figur 4 gezeigt, weist die Pumpe 30 weiterhin einen zweiten externen Druckanschluss 34b auf. Dieser wird verwendet bei einer Montage der Pumpe 30 in einer zweiten Bauform und mit zumindest teilweise externer Verrohrung, und zwar in entsprechender Weise wie in Figur 5 gezeigt. Es entspricht also beispielsweise die Verwendung des ersten externen Druckanschluss 34a aus Figur 4 der Verwendung des ersten internen Druckanschlusses 56a in Figur 5, die Verwendung des zweiten externen Druckanschluss 34b aus Figur 4 der Verwendung des zweiten internen Druckanschlusses 56b in Figur 5, die Verwendung des externen Sauganschluss 36 aus Figur 4 der Verwendung des internen Sauganschlusses 54 in Figur 5.

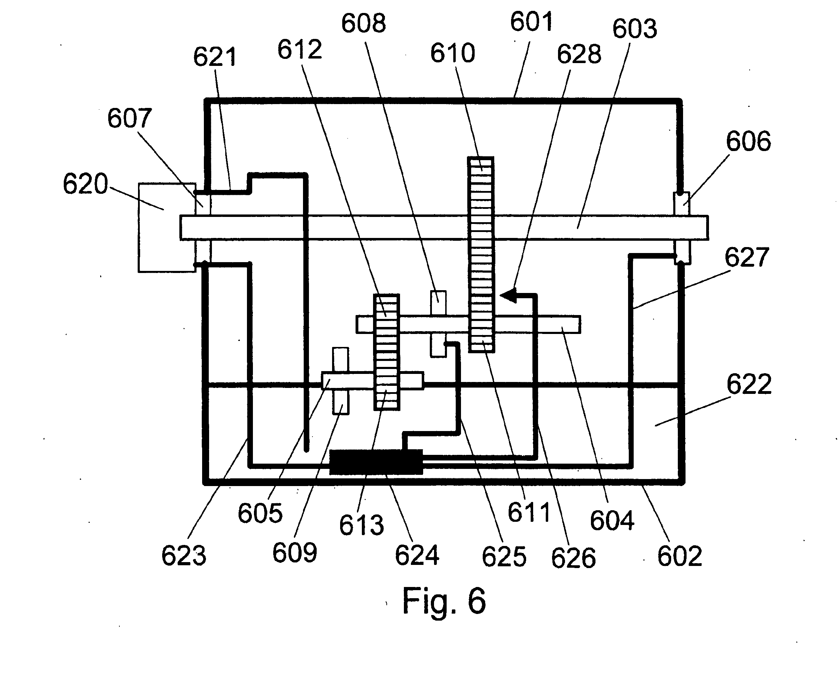

Figur 6 zeigt schematisch ein erfindungsgemäßes Ausführungsbeispiel eines Getriebes mit Wellenpumpe und interner Verrohrung.

Das Getriebegehäuse umfasst eine erste Gehäuseschale 601 und eine zweite Gehäuseschale 602. Das Getriebe umfasst eine erste Welle 603, eine zweite Welle 604 und eine dritte Welle 605, auf denen wie gezeigt ein erstes Zahnrad 610, ein zweites Zahnrad 611, ein drittes Zahnrad 612 und ein viertes Zahnrad 613 vorgesehen sind. Die Wellen sind zumindest durch ein erstes Lager 606, ein zweites Lager 607, ein drittes Lager 608 und ein viertes Lager 609 festgelegt und/oder gelagert.

Die Anordnung der Wellen, Zahnräder und Lager relativ zueinander und bezüglich der Gehäuseschalen (610, 620) ist lediglich schematisch zur Verdeutlichung des Funktionsprinzips dargestellt. Der Fachmann wird gegebenenfalls routinemäßig weitere, nicht gezeigte Lager und weitere Zahnräder und weitere Wellen und/oder diese in einer anderen Anordnung vorsehen, um weitere erfindungsgemäße Ausführungsbeispiele bereitzustellen.

Die erste Welle 603 in Figur 6 ist eine entreibende Welle des Getriebes.

An der ersten Welle 603 ist eine Pumpe 620 montiert, die von der Welle 603 angetrieben wird. Die Pumpe 620 ist als Wellenpumpe ausgebildet und dient als Ölumwälzpumpe.

Die Pumpe 620 ist mit einem Saugrohr 621 verbunden, das in einen Ölsumpf 622 ragt. Die Pumpe 620 ist über ein Druckrohr 623 mit einem Verrohrungsverteiler 624 verbunden. Somit pumpt die über die erste Welle 603 angetriebene Pumpe 620 Öl aus dem Ölsumpf 622 an den Verrohrungsverteiler 624.

An den Verrohrungsverteiler 624 ist zumindest ein erstes Versorgungsrohr 625, ein zweites Versorgungsrohr 626 und ein drittes Versorgungsrohr 627 angeschlossen, durch die das an den Verrohrungsverteiler 624 gepumpte Öl weitergeleitet wird.

Der Verrohrungsverteiler 624 ist also zur Verteilung von Öl vorgesehen.

Das erste Versorgungsrohr 625 endet im dritten Lager 608, wodurch Öl zur Schmierung des dritten Lagers 608 bereitgestellt wird.

Das zweite Versorgungsrohr 626 endet in einer Düse 628, durch die Öl in den Zahneingriff des ersten Zahnrads 610 mit dem zweiten Zahnrad 611 gespritzt wird.

Das dritte Versorgungsrohr 627 endet im ersten Lager 606, das im Getriebegehäuse festgelegt ist. Durch das dritte Versorgungsrohr 627 wird somit das erste Lager 606 geschmiert.

Weitere Versorgungsrohre sind vorgesehen, aber aus Gründen der Übersichtlichkeit nicht gezeigt. Die dritte Welle 605, das vierte Lager 609 und das vierte Zahnrad 613 tauchen jeweils teilweise in den Ölsumpf 622 ein. Die genannten Teile (605, 609, 613) werden somit direkt aus dem Ölsumpf 622 mit Schmieröl versorgt. Das vierte Zahnrad 613 versorgt über den gemeinsamen Zahneingriff das dritte Zahnrad 612 mit Schmieröl aus dem Ölsumpf 622.

Durch die Ausgestaltung nach Figur 5 ist zum einen die gesamten Verrohrung zur Ölschmierung im Getriebegehäuse und damit gegen unbeabsichtigte Beschädigung geschützt angeordnet, zum anderen die obere Gehäuseschale 601 abnehmbar, ohne den mit Druck beaufschlagten, empfindlichen Teil der Verrohrung, umfassend zumindest Druckrohr 623, Verrohrungsverteiler 624 und Versorgungsrohre (625, 626, 627), demontieren zu müssen. Insbesondere ist nach Abnehmen der oberen Gehäuseschale 601 höchstens das einfach und robust ausgeführte Saugrohr 621 von Hand neu zu justieren.

In einem weiteren Ausführungsbeispiel ist das Getriebegehäuse als monobloc-Variante, also einteilig, ausgeführt. Dabei wird vorteilhaft die Anordnung von Bohrungen für Wellen oder Verrohrungsanschlüsse oder andere Durchführungen und/oder Montagepunkte identisch zur Variante mit geteiltem Gehäuse gewählt. Somit sind die Getriebegehäuse der monobloc-Variante und der oben beschriebenen zweiteiligen Variante im Wesentlichen identisch. Beide Gehäuse unterscheiden sich lediglich in den Details, die mit der Zweiteiligkeit unmittelbar zusammenhängen, beispielsweise eine Schnittfläche mit Bohrungen für Schrauben, Dichtmittel usw. Somit sind viele Fertigungsschritte und Bedienungsschritte für beide Varianten gleich ausführbar.

In weiteren erfindungsgemäßen Ausführungsbeispielen weist die Pumpe einen Sauganschluss und zwei Druckausgänge auf, wobei die Ausgänge symmetrisch zur Pumpenachse angeordnet sind. Somit kann dann der Getriebedeckel mit dem System zusammen auf der gegenüberliegenden Seite des Getriebes vorgesehen werden und dabei der andere Ausgang für das im Getriebeinneren vorgesehene Leitungssystem vorgesehen werden. Das Leitungssystem muss dabei nur unwesentlich geändert werden und die Montage kann in gleicher Art erfolgen. Somit ist der gleiche Deckel mit System am Getriebe wiederverwendbar.

In weiteren erfindungsgemäßen Ausführungsbeispielen weist die Pumpe einen Flansch zum Getriebe hin auf und kann durch eine andere Pumpe ersetzt werden, die am gleichen Flansch anmontierbar ist. Auf diese Weise sind verschiedene Pumpen, insbesondere axial verschieden lange Pumpen realisierbar. Somit ist je nach Drehzahl der die Pumpe antreibenden Welle oder je nach benötigter Durchflussmenge eine größere oder kleinere Pumpe verbindbar.

In weiteren erfindungsgemäßen Ausführungsbeispielen ist die Pumpe verbunden und angetrieben von der eintreibenden Welle oder der ersten Zwischenwelle des Getriebes. Somit ist nur eine kleine Pumpe notwendig, da eine hohe Drehzahl der Pumpe vorliegt.

Unter Öl werden bei der Erfindung auch andere flüssige Schmierstoffe verstanden, beispielsweise Schmierfett, dessen Viskosität bei Betriebstemperatur der einer Flüssigkeit gleicht und das somit pumpbar ist.

## Patentansprüche

1. Getriebe (15) mit einer Schmierölpumpe (1, 10, 70a, 70b, 620),
wobei eine Welle (24, 603, 604, 605) des Getriebes (15) eine die Schmierölpumpe (1, 10, 70a, 70b, 620) antreibende Welle (603) ist, insbesondere dass die Welle (24, 603, 604, 605) der Schmierölpumpe (1, 10, 70a, 70b, 620) koaxial zu einer Welle (24, 603, 604, 605) angeordnet ist, die von einer Stufe des Getriebes (15) umfasst wird, insbesondere von dem Getriebestrang umfasst ist, der eine eintreibende und eine abtreibende Welle (603, 605) des Getriebes (15) verbindet,wobei
die Schmierölpumpe (1, 10, 70a, 70b, 620) zwei interne Anschlüsse erster Art (56a, 56b) welche mit einer internen Verrohrung in einem Inneren des Getriebes (15) verbindbar sind, aufweist, deren Öffnungen auf das Getriebegehäuse (601, 602) hin weisen, einen internen Anschluss zweiter Art (54), welcher mit einer intemen Verrohrung in einem Inneren des Getriebes (15) verbinbar ist, aufweist, dessen Öffnung auf das Getriebegehäuse (601, 602) hin weist, **dadurch gekennzeichnet, dass**, die Schmierölpumpe zwei externe Anschlüsse erster Art (34a, 34b), welche mit einer externen Verrohrung außerhalb eines Gehäuses des Getriebes (15) verbindbar sind, aufweist, deren Öffnungen parallel zur Gehäuseoberfläche weisen, , einen externen Anschluss zweiter Art (36), welcher mit einer externen Verrohrung außerhalb eines Gehäuses des Getriebes (15) verbindbar ist, aufweist, dessen Öffnung parallel zur Gehäuseoberfläche weist.

2. Getriebe (15) nach Anspruch 1,
**dadurch gekennzeichnet, dass**
die Schmierölpumpe (1, 10, 70a, 70b, 620) einen ersten Anschluss erster Art (56a, 56b) und einen zweiten Anschluss erster Art (56a, 56b) aufweist, die derart symmetrisch zueinander angeordnet sind, dass bei Montage der Schmierölpumpe (1, 10, 70a, 70b, 620) auf einer ersten Seite des Getriebes (15) der erste Anschluss erster Art (56a, 56b) mit dem im Getriebeinneren vorgesehenen Rohrleitungssystem (621, 623, 624, 625, 626, 627, 628) verbunden ist, wobei der zweite Anschluss erster Art (56a, 56b) verschlossen ist, und dass bei Montage der Schmierölpumpe (1, 10, 70a, 70b, 620) auf einer zweiten Seiten des Getriebes (15) der zweite Anschluss erster Art (56a, 56b) mit dem im Getriebeinneren vorgesehenen Rohrleitungssystem (621, 623, 624, 625, 626, 627, 628) verbunden ist, wobei der erste Anschluss erster Art (56a, 56b) verschlossen ist.

3. Getriebe (15) nach Anspruch 1 oder 2,
**dadurch gekennzeichnet, dass**
die Schmierölpumpe (1, 10, 70a, 70b, 620) an einem Gehäusedeckel des Getriebes (15) montiert ist,
wobei der Gehäusedeckel (16, 21) ein Lager für die Welle (24, 603, 604, 605) des Getriebes (15) zumindest teilweise abdeckt.

4. Getriebe (15) nach mindestens einem der vorangegangenen Ansprüche,
**dadurch gekennzeichnet, dass**
die Welle (24, 603, 604, 605) des Getriebes (15) die eintreibende Welle (603) oder die erste Zwischenwelle (604) ist,
und/oder
dass die Schmierölpumpe (1, 10, 70a, 70b, 620) über einen Gehäusedeckel (16,21) an eine Ölkreislauf-Verrohrung (621, 623, 624, 625, 626, 627, 628) angeschlossen ist.

5. Getriebe (15) nach mindestens einem der vorangegangenen Ansprüche,
**dadurch gekennzeichnet, dass**
dass die Schmierölpumpe (1, 10, 70a, 70b, 620) mit einem Verteiler (4, 11) verbunden ist, an welchem zumindest ein erster Sensor (2, 3, 13, 14) verbunden ist,
insbesondere wobei am Verteiler (4, 11) ein Filter und/oder ein zweiter Sensor (2, 3, 13, 14) angeschlossen ist.

6. Getriebe (15) nach mindestens einem der vorangegangenen Ansprüche,
**dadurch gekennzeichnet, dass**
dass die Schmierölpumpe (1, 10, 70a, 70b, 620) mit ihrem Pumpenflansch am Getriebe (15) verbunden ist, wobei insbesondere die Welle (24, 603, 604, 605) der Schmierölpumpe (1, 10, 70a, 70b, 620) koaxial mit einer Welle (24, 603, 604, 605) des Getriebes (15) angeordnet ist, und/oder
dass mindestens ein Sauganschluss (36, 54) und mindestens ein Druckanschluss (34a, 34b, 56a, 56b) der Schmierölpumpe (1, 10, 70a, 70b, 620) mit dem im Inneren des Getriebes (15) vorgesehenen Rohrleitungssystem (621, 623, 624, 625, 626, 627, 628), insbesondere mit einer internen Ölkreislauf-Verrohrung, verbunden sind,
und/oder
dass der Druckausgang (34a, 34b) in axiale Richtung in Bezug auf die Achse der Welle (24, 603, 604, 605) der Schmierölpumpe (1, 10, 70a, 70b, 620) weist.

7. Getriebe (15) nach mindestens einem der vorangegangenen Ansprüche,
**dadurch gekennzeichnet, dass**
ein Sensor (2, 3, 13, 14) mittels elektrischer Leitungen mit einer elektronischen Schaltung, insbesondere zum Auswerten der Sensorsignale, verbunden ist,
und/oder
dass axial verschieden lange Schmierölpumpen (1, 10, 70a, 70b, 620) am Pumpenflansch verbindbar sind,
und/oder
dass die Schmierölpumpe (1, 10, 70a, 70b, 620) eine Pumprichtung aufweist, die unabhängig vom Drehsinn der Welle (24, 603, 604, 605) der Schmierölpumpe (1, 10, 70a, 70b, 620) ist.

8. Getriebe (15) nach mindestens einem der vorangegangenen Ansprüche,
**dadurch gekennzeichnet, dass**
die Schmierölpumpe (1, 10, 70a, 70b, 620) einen ersten Anschluss erster Art (56a, 56b) und einen zweiten Anschluss erster Art (56a, 56b) aufweist, die derart symmetrisch zueinander angeordnet sind, dass bei Montage der Schmierölpumpe (1, 10, 70a, 70b, 620) auf einer ersten Seite des Getriebes (15) der erste Anschluss erster Art (56a, 56b) mit dem im Getriebeinneren vorgesehenen Rohrleitungssystem (621, 623, 624, 625, 626, 627, 628) verbunden ist, wobei der zweite Anschluss erster Art (56a, 56b) verschlossen ist, und dass bei Montage der Schmierölpumpe (1, 10, 70a, 70b, 620) auf einer zweiten Seiten des Getriebes (15) der zweite Anschluss erster Art (56a, 56b) mit dem im Getriebeinneren vorgesehenen Rohrleitungssystem (621, 623, 624, 625, 626, 627, 628) verbunden ist, wobei der erste Anschluss erster Art (56a, 56b) verschlossen ist,
und/oder
dass die Schmierölpumpe (1, 10, 70a, 70b, 620) einen Anschluss zweiter Art (36, 54) aufweist, der bei Montage der Schmierölpumpe (1, 10, 70a, 70b, 620) auf jeder der beiden Seiten jeweils mit dem im Getriebeinneren vorgesehenen Rohrleitungssystem (621, 623, 624, 625, 626, 627, 628), insbesondere mit einer Ölkreislauf-Verrohrung, verbunden ist, und/oder
dass die Anschlüsse erster Art (56a, 56b) Druckanschlüsse sind,
und der Anschluss zweiter Art (36, 54) ein Sauganschluss ist,
und/oder
dass die Anschlüsse erster Art Sauganschlüsse sind,
und der Anschluss zweiter Art ein Druckanschluss ist.

9. Getriebe (15) nach mindestens einem der vorangegangenen Ansprüche,
**dadurch gekennzeichnet, dass**
erste und zweite Seite des Getriebes (15) gegenüberliegende Seiten des Getriebes (15) sind

10. Getriebe (15) nach Anspruch 9,
**dadurch gekennzeichnet, dass**
dass die Schmierölpumpe (1, 10, 70a, 70b, 620) bei Montage auf der ersten Seite und auf der zweiten Seite mit derselben Welle (24, 603, 604, 605) verbunden ist.

11. Getriebe (15) nach mindestens einem der vorangegangenen Ansprüche,
**dadurch gekennzeichnet, dass**
dass die Schmierölpumpe (1, 10, 70a, 70b, 620) über einen Gehäusedeckel (16, 21) mit dem Getriebe (15) verbunden ist,
wobei die Schmierölpumpe (1, 10, 70a, 70b, 620) durch den Gehäusedeckel mit einer internen Ölkreislauf-Verrohrung (621, 623, 624, 625, 626, 627, 628) im Getriebegehäuse verbindbar ist,
und/oder
dass die Schmierölpumpe (1, 10, 70a, 70b, 620) über eine externe Verrohrung mit einem externen Ölkreislauf verbindbar ist.

12. Getriebe (15) nach mindestens einem der vorangegangenen Ansprüche,
**dadurch gekennzeichnet, dass**
die internen Anschlüsse (54, 56a, 56b) der Schmierölpumpe (1, 10, 70a, 70b, 620) in axiale Richtung in Bezug auf die Welle (24, 603, 604, 605) der Schmierölpumpe (1, 10, 70a, 70b, 620) weisen
und die externen Anschlüsse (34a, 34b, 36) der Schmierölpumpe (1, 10, 70a, 70b, 620) in radiale Richtung in Bezug auf die Welle (24, 603, 604, 605) der Schmierölpumpe (1, 10, 70a, 70b, 620) weisen.

13. Getriebe-Baureihe, umfassend Varianten,
wobei in einer ersten Variante eine Schmierölpumpe (1, 10, 70a, 70b, 620) an einem ersten Ende einer Welle (24, 603, 604, 605) des Getriebes (15) angeordnet ist und durch die Welle (24, 603, 604, 605) des Getriebes (15) angetrieben wird,
und in einer zweiten Variante die Schmierölpumpe (1, 10, 70a, 70b, 620) an einem zweiten Ende der Welle (24, 603, 604, 605) des Getriebes (15) angeordnet ist und durch diese Welle (24, 603, 604, 605) des Getriebes (15) angetrieben wird,
wobei die Schmierölpumpe (1, 10, 70a, 70b, 620) jeweils an eine Ölkreislauf-Verrohrung (621, 623, 624, 625, 626, 627, 628) im Getriebeinneren angeschlossen ist,
**dadurch gekennzeichnet,**
**dass** die Schmierölpumpe (1, 10, 70a, 70b, 620) einen ersten Anschluss erster Art (56a, 56b) und einen zweiten Anschluss erster Art (56a, 56b) aufweist, die derart symmetrisch zueinander angeordnet sind, dass bei der ersten Variante die Schmierölpumpe (1, 10, 70a, 70b, 620) auf einer ersten Seite des Getriebes (15) montiert ist, wobei der erste Anschluss erster Art (56a, 56b) mit dem im Getriebeinneren vorgesehenen Rohrleitungssystem (621, 623, 624, 625, 626, 627, 628) verbunden ist und der zweite Anschluss erster Art (56a, 56b) verschlossen ist, und dass bei der zweiten Variante die Schmierölpumpe (1, 10, 70a, 70b, 620) auf einer zweiten Seiten des Getriebes (15) montiert ist, wobei der zweite Anschluss erster Art (56a, 56b) mit einem im Getriebeinneren vorgesehenen Rohrleitungssystem (621, 623, 624, 625, 626, 627, 628) verbunden ist und der erste Anschluss erster Art (56a, 56b) verschlossen ist.

14. Getriebe-Baureihe nach dem vorangegangenen Anspruch,
**dadurch gekennzeichnet, dass**
in der ersten Variante oder der zweiten Variante die Schmierölpumpe (1, 10, 70a, 70b, 620) an einem Deckel (16, 21) des Getriebegehäuses (601, 602) vorgesehen ist, wobei der Deckel ein Lager einer Welle (24, 603, 604, 605) des Getriebes (15), insbesondere der eintreibenden Welle (603), abdeckt und die Pumpe (1, 10, 70a, 70b, 620) über den Deckel (16, 21) an eine Ölkreislauf-Verrohrung im Getriebeinneren angeschlossen ist,
und wobei in einer weiteren Variante die Schmierölpumpe (1, 10, 70a, 70b, 620) an einem Deckel (16, 21) des Getriebegehäuses (601, 602) vorgesehen ist, wobei die Schmierölpumpe (1, 10, 70a, 70b, 620) an ein externes Verrohrungssystem angeschlossen ist,
und/oder dass
in einer monobloc-Variante der ersten oder zweiten Variante das Getriebegehäuse in monobloc-Bauweise ausgeführt ist,
in einer zweiteiligen Variante der ersten oder zweiten Variante das Getriebegehäuse (601, 602) mindestens zweiteilig ausgeführt ist,
wobei in beiden Varianten eine interne Ölkreislauf-Verrohrung (621, 623, 624, 625, 626, 627, 628) vorgesehen ist
und wobei die Getriebegehäuse (601, 602) der beiden Varianten im Wesentlichen identisch ausgeformt sind, wobei die Unterschiede zwischen den Getriebegehäusen (601, 602, 627, 628) der monobloc-Variante einerseits und der zweiteiligen Variante andererseits nur durch die zweiteilige Ausführung der zweiteiligen Variante begründet sind.

15. Verfahren zum Herstellen von Varianten einer Getriebe-Baureihe nach Anspruch 13 oder 14,
**dadurch gekennzeichnet, dass**
eine Schmierölpumpe (1, 10, 70a, 70b, 620) mit einer Getriebewelle (24, 603, 604, 605) zur Bildung eines Getriebes (15) nach einem der Ansprüche 1 bis 12 verbunden wird.

## Claims

1. A transmission (15) with a lubricating-oil pump (1, 10, 70a, 70b, 620),
wherein a shaft (24, 603, 604, 605) of the transmission (15) is a shaft (603) which drives the lubricating-oil pump (1, 10, 70a, 70b, 620), in particular that the shaft (24, 603, 604, 605) of the lubricating-oil pump (1, 10, 70a, 70b, 620) is arranged coaxially to a shaft (24, 603, 604, 605) which is encompassed by a stage of the transmission (15), in particular is encompassed by the power train which connects an input and an output shaft (603, 605) of the transmission (15), wherein
the lubricating-oil pump (1, 10, 70a, 70b, 620) has two internal connections of first type (56a, 56b) which can be connected to an internal pipework system in an interior of the transmission (15), the openings of which connections point towards the transmission casing (601, 602), has an internal connection of second type (54) which can be connected to an internal pipework system in an interior of the transmission (15), the opening of which connections points towards the transmission casing (601, 602), **characterised in that** the lubricating-oil pump has two external connections of first type (34a, 34b) which can be connected to an external pipework system outside a casing of the transmission (15), the openings of which connections point parallel to the casing surface, and an external connection of second type (36) which can be connected to an external pipework system outside a casing of the transmission (15), the opening of which connection points parallel to the casing surface.

2. A transmission (15) according to Claim 1,
**characterised in that**
the lubricating-oil pump (1, 10, 70a, 70b, 620) has a first connection of first type (56a, 56b) and a second connection of first type (56a, 56b) which are arranged symmetrically to one another such that upon mounting the lubricating-oil pump (1, 10, 70a, 70b, 620) on a first side of the transmission (15) the first connection of first type (56a, 56b) is connected to the pipe system (621, 623, 624, 625, 626, 627, 628) provided in the interior of the transmission, the second connection of first type (56a, 56b) being closed, and **in that** upon mounting the lubricating-oil pump (1, 10, 70a, 70b, 620) on a second sides [sic] of the transmission (15) the second connection of first type (56a, 56b) is connected to the pipe system (621, 623, 624, 625, 626, 627, 628) provided in the interior of the transmission, the first connection of first type (56a, 56b) being closed.

3. A transmission (15) according to Claim 1 or 2,
**characterised in that**
the lubricating-oil pump (1, 10, 70a, 70b, 620) is mounted on a casing cover of the transmission (15),
the casing cover (16, 21) at least partially covering a bearing for the shaft (24, 603, 604, 605) of the transmission (15).

4. A transmission (15) according to at least one of the preceding claims,
**characterised in that**
the shaft (24, 603, 604, 605) of the transmission (15) is the input shaft (603) or the first intermediate shaft (604),
and/or
**in that** the lubricating-oil pump (1, 10, 70a, 70b, 620) is connected via a casing cover (16, 21) to an oil-circuit pipework system (621, 623, 624, 625, 626, 627, 628).

5. A transmission (15) according to at least one of the preceding claims,
**characterised in that**
the lubricating-oil pump (1, 10, 70a, 70b, 620) is connected to a distributor (4, 11) to which at least a first sensor (2, 3, 13, 14) is connected,
in particular with a filter and/or a second sensor (2, 3, 13, 14) being connected to the distributor (4, 11).

6. A transmission (15) according to at least one of the preceding claims,
**characterised in that**
the lubricating-oil pump (1, 10, 70a, 70b, 620) is connected with its pump flange to the transmission (15), with in particular the shaft (24, 603, 604, 605) of the lubricating-oil pump (1, 10, 70a, 70b, 620) being arranged coaxially with a shaft (24, 603, 604, 605) of the transmission (15),
and/or
**in that** at least one suction connection (36, 54) and at least one pressure connection (34a, 34b, 56a, 56b) of the lubricating-oil pump (1, 10, 70a, 70b, 620) are connected to the pipe system (621, 623, 624, 625, 626, 627, 628) provided in the interior of the transmission (15), in particular to an internal oil-circuit pipework system,
and/or
**in that** the pressure outlet (34a, 34b) points in the axial direction relative to the axis of the shaft (24, 603, 604, 605) of the lubricating-oil pump (1, 10, 70a, 70b, 620).

7. A transmission (15) according to at least one of the preceding claims,
**characterised in that**
a sensor (2, 3, 13, 14) is connected by means of electric lines to an electronic circuit, in particular for evaluating the sensor signals,
and/or
**in that** lubricating-oil pumps (1, 10, 70a, 70b, 620) of axially different lengths can be connected to the pump flange,
and/or
**in that** the lubricating-oil pump (1, 10, 70a, 70b, 620) has a pumping direction which is independent of the direction of rotation of the shaft (24, 603, 604, 605) of the lubricating-oil pump (1, 10, 70a, 70b, 620).

8. A transmission (15) according to at least one of the preceding claims,
**characterised in that**
the lubricating-oil pump (1, 10, 70a, 70b, 620) has a first connection of first type (56a, 56b) and a second connection of first type (56a, 56b) which are arranged symmetrically to one another such that upon mounting the lubricating-oil pump (1, 10, 70a, 70b, 620) on a first side of the transmission (15) the first connection of first type (56a, 56b) is connected to the pipe system (621, 623, 624, 625, 626, 627, 628) provided in the interior of the transmission, the second connection of first type (56a, 56b) being closed, and **in that** upon mounting the lubricating-oil pump (1, 10, 70a, 70b, 620) on a second sides [sic] of the transmission (15) the second connection of first type (56a, 56b) is connected to the pipe system (621, 623, 624, 625, 626, 627, 628) provided in the interior of the transmission, the first connection of first type (56a, 56b) being closed, and/or
**in that** the lubricating-oil pump (1, 10, 70a, 70b, 620) has a connection of second type (36, 54) which upon mounting the lubricating-oil pump (1, 10, 70a, 70b, 620) on each of the two sides is connected in each case to the pipe system (621, 623, 624, 625, 626, 627, 628) provided in the interior of the transmission, in particular to an oil-circuit pipework system,
and/or
**in that** the connections of first type (56a, 56b) are pressure connections,
and the connection of second type (36, 54) is a suction connection,
and/or
**in that** the connections of first type are suction connections,
and the connection of second type is a pressure connection.

9. A transmission (15) according to at least one of the preceding claims,
**characterised in that**
the first and second side of the transmission (15) are opposing sides of the transmission (15).

10. A transmission (15) according to Claim 9,
**characterised in that**
the lubricating-oil pump (1, 10, 70a, 70b, 620) upon mounting on the first side and on the second side is connected to the same shaft (24, 603, 604, 605).

11. A transmission (15) according to at least one of the preceding claims,
**characterised in that**
that the lubricating-oil pump (1, 10, 70a, 70b, 620) is connected to the transmission (15) via a casing cover (16, 21),
the lubricating-oil pump (1, 10, 70a, 70b, 620) being able to be connected through the casing cover to an internal oil-circuit pipework system (621, 623, 624, 625, 626, 627, 628) in the transmission casing,
and/or
**in that** the lubricating-oil pump (1, 10, 70a, 70b, 620) is able to be connected via an external pipework system to an external oil circuit.

12. A transmission (15) according to at least one of the preceding claims,
**characterised in that**
the internal connections (54, 56a, 56b) of the lubricating-oil pump (1, 10, 70a, 70b, 620) point in the axial direction relative to the shaft (24, 603, 604, 605) of the lubricating-oil pump (1, 10, 70a, 70b, 620)
and the external connections (34a, 34b, 36) of the lubricating-oil pump (1, 10, 70a, 70b, 620) point in the radial direction relative to the shaft (24, 603, 604, 605) of the lubricating-oil pump (1, 10, 70a, 70b, 620).

13. A transmission series, comprising variants,
wherein in a first variant a lubricating-oil pump (1, 10, 70a, 70b, 620) is arranged on a first end of a shaft (24, 603, 604, 605) of the transmission (15) and is driven by the shaft (24, 603, 604, 605) of the transmission (15),
and in a second variant the lubricating-oil pump (1, 10, 70a, 70b, 620) is arranged on a second end of the shaft (24, 603, 604, 605) of the transmission (15) and is driven by this shaft (24, 603, 604, 605) of the transmission (15),
the lubricating-oil pump (1, 10, 70a, 70b, 620) being connected in each case to an oil-circuit pipework system (621, 623, 624, 625, 626, 627, 628) in the interior of the transmission,
**characterised in that**
the lubricating-oil pump (1, 10, 70a, 70b, 620) has a first connection of first type (56a, 56b) and a second connection of first type (56a, 56b) which are arranged symmetrically to one another such that in the first variant the lubricating-oil pump (1, 10, 70a, 70b, 620) is mounted on a first side of the transmission (15), the first connection of first type (56a, 56b) being connected to the pipe system (621, 623, 624, 625, 626, 627, 628) provided in the interior of the transmission and the second connection of first type (56a, 56b) being closed, and **in that** in the second variant the lubricating-oil pump (1, 10, 70a, 70b, 620) is mounted on a second side of the transmission (15), the second connection of first type (56a, 56b) being connected to a pipe system (621, 623, 624, 625, 626, 627, 628) provided in the interior of the transmission and the first connection of first type (56a, 56b) being closed.

14. A transmission series according to the preceding claim,
**characterised in that**
in the first variant or the second variant the lubricating-oil pump (1, 10, 70a, 70b, 620) is provided on a cover (16, 21) of the transmission casing (601, 602), the cover covering a bearing of a shaft (24, 603, 604, 605) of the transmission (15), in particular of the input shaft (603), and the pump (1, 10, 70a, 70b, 620) being connected via the cover (16, 21) to an oil-circuit pipework system in the interior of the transmission,
and with, in a further variant, the lubricating-oil pump (1, 10, 70a, 70b, 620) being provided on a cover (16, 21) of the transmission casing (601, 602), the lubricating-oil pump (1, 10, 70a, 70b, 620) being connected to an external pipework system,
and/or **in that**
in a monobloc variant of the first or second variant, the transmission casing is of monobloc construction,
in a two-part variant of the first or second variant, the transmission casing (601, 602) is constructed in at least two parts,
with an internal oil-circuit pipework system (621, 623, 624, 625, 626, 627, 628) being provided in both variants,
and the transmission casings (601, 602) of both variants being formed substantially identically, the differences between the transmission casings (601, 602, 627, 628) of the monobloc variant on one hand and of the two-part variant on the other hand being accounted for only by the two-part construction of the two-part variant.

15. A method for producing variants of a transmission series according to Claim 13 or 14,
**characterised in that**
a lubricating-oil pump (1, 10, 70a, 70b, 620) is connected to a transmission shaft (24, 603, 604, 605) to form a transmission (15) according to one of Claims 1 to 12.

## Revendications

1. Transmission (15) dotée d'une pompe à lubrifiant (1, 10, 70a, 70b, 620), sachant qu'un arbre (24, 603, 604, 605) de la transmission (15) est un arbre (603) entraînant la pompe à lubrifiant (1, 10, 70a, 70b, 620), en particulier que l'arbre (24, 603, 604, 605) de la pompe à lubrifiant (1, 10, 70a, 70b, 620) est disposé coaxialement à un arbre (24, 603, 604, 605) qui est compris dans un étage de la transmission (15), en particulier qui est compris dans la ligne de transmission qui relie un arbre d'entrée et un arbre de sortie (603, 605) de la transmission (15),
sachant que la pompe à lubrifiant (1, 10, 70a, 70b, 620) présente deux branchements internes d'un premier type (56a, 56b), qui peuvent être reliés à une tuyauterie interne dans un espace intérieur de la transmission (15) et dont les ouvertures sont dirigées vers le carter de transmission (601, 602), et un branchement interne d'un deuxième type (54), qui peut être relié à une tuyauterie interne dans un espace intérieur de la transmission (15) et dont l'ouverture est dirigée vers le carter de transmission (601, 602),
**caractérisée en ce que** la pompe à lubrifiant présente deux branchements externes d'un premier type (34a, 34b), qui peuvent être reliés à une tuyauterie externe à l'extérieur d'un carter de la transmission (15) et dont les ouvertures sont dirigées parallèlement à la surface du carter, et un branchement externe d'un deuxième type (36), qui peut être relié à une tuyauterie externe à l'extérieur d'un carter de la transmission (15) et dont l'ouverture est dirigée parallèlement à la surface du carter.

2. Transmission (15) selon la revendication 1, **caractérisée en ce que** la pompe à lubrifiant (1, 10, 70a, 70b, 620) présente un premier branchement du premier type (56a, 56b) et un deuxième branchement du premier type (56a, 56b) qui sont disposés symétriquement l'un par rapport à l'autre de telle sorte qu'en cas de montage de la pompe à lubrifiant (1, 10, 70a, 70b, 620) sur un premier côté de la transmission (15), le premier branchement du premier type (56a, 56b) est relié au système de conduites (621, 623, 624, 625, 626, 627, 628) prévu à l'intérieur de la transmission, sachant que le deuxième branchement du premier type (56a, 56b) est fermé, et qu'en cas de montage de la pompe à lubrifiant (1, 10, 70a, 70b, 620) sur un deuxième côté de la transmission (15), le deuxième branchement du premier type (56a, 56b) est relié à un système de conduites (621, 623, 624, 625, 626, 627, 628) prévu à l'intérieur de la transmission, sachant que le premier branchement du premier type (56a, 56b) est fermé.

3. Transmission (15) selon la revendication 1 ou 2, **caractérisée en ce que** la pompe à lubrifiant (1, 10, 70a, 70b, 620) est montée sur un couvercle de carter de la transmission (15),
sachant que le couvercle de carter (16, 21) recouvre au moins partiellement un palier pour l'arbre (24, 603, 604, 605) de la transmission (15).

4. Transmission (15) selon au moins une des revendications précédentes, **caractérisée en ce que** l'arbre (24, 603, 604, 605) de la transmission (15) est l'arbre d'entrée (603) ou le premier arbre intermédiaire (604),
et/ou **en ce que** la pompe à lubrifiant (1, 10, 70a, 70b, 620) est raccordée par l'intermédiaire d'un couvercle de carter (16, 21) à une tuyauterie de circuit d'huile (621, 623, 624, 625, 626, 627, 628).

5. Transmission (15) selon au moins une des revendications précédentes, **caractérisée en ce que** la pompe à lubrifiant (1, 10, 70a, 70b, 620) est reliée à un distributeur (4, 11), auquel est relié au moins un premier capteur (2, 3, 13, 14),
sachant notamment qu'un filtre et/ou un deuxième capteur (2, 3, 13, 14) est raccordé au distributeur (4, 11).

6. Transmission (15) selon au moins une des revendications précédentes, **caractérisée en ce que** la pompe à lubrifiant (1, 10, 70a, 70b, 620) est reliée par sa bride de pompe à la transmission (15), sachant notamment que l'arbre (24, 603, 604, 605) de la pompe à lubrifiant (1, 10, 70a, 70b, 620) est disposé coaxialement à un arbre (24, 603, 604, 605) de la transmission (15),
et/ou **en ce qu'**au moins un branchement d'aspiration (36, 54) et au moins un branchement de refoulement (34a, 34b, 56a, 56b) de la pompe à lubrifiant (1, 10, 70a, 70b, 620) sont reliés au système de conduites (621, 623, 624, 625, 626, 627, 628) prévu à l'intérieur de la transmission (15), en particulier à une tuyauterie de circuit d'huile interne,
et/ou **en ce que** la sortie de refoulement (34a, 34b) est dirigée en direction axiale relativement à l'axe de l'arbre (24, 603, 604, 605) de la pompe à lubrifiant (1, 10, 70a, 70b, 620).

7. Transmission (15) selon au moins une des revendications précédentes, **caractérisée en ce qu'**un capteur (2, 3, 13, 14) est relié au moyen de lignes électriques à un montage électronique, en particulier pour interpréter les signaux du capteur,
et/ou **en ce que** des pompes à lubrifiant (1, 10, 70a, 70b, 620) de différentes longueurs axiales peuvent être reliées à la bride de pompe,
et/ou **en ce que** la pompe à lubrifiant (1, 10, 70a, 70b, 620) présente une direction de pompage qui est indépendante du sens de rotation de l'arbre (24, 603, 604, 605) de la pompe à lubrifiant (1, 10, 70a, 70b, 620).

8. Transmission (15) selon au moins une des revendications précédentes, **caractérisée en ce que** la pompe à lubrifiant (1, 10, 70a, 70b, 620) présente un premier branchement du premier type (56a, 56b) et un deuxième branchement du premier type (56a, 56b) qui sont disposés symétriquement l'un par rapport à l'autre de telle sorte qu'en cas de montage de la pompe à lubrifiant (1, 10, 70a, 70b, 620) sur un premier côté de la transmission (15), le premier branchement du premier type (56a, 56b) est relié au système de conduites (621, 623, 624, 625, 626, 627, 628) prévu à l'intérieur de la transmission, sachant que le deuxième branchement du premier type (56a, 56b) est fermé, et qu'en cas de montage de la pompe à lubrifiant (1, 10, 70a, 70b, 620) sur un deuxième côté de la transmission (15), le deuxième branchement du premier type (56a, 56b) est relié à un système de conduites (621, 623, 624, 625, 626, 627, 628) prévu à l'intérieur de la transmission, sachant que le premier branchement du premier type (56a, 56b) est fermé,
et/ou **en ce que** la pompe à lubrifiant (1, 10, 70a, 70b, 620) présente un branchement du deuxième type (36, 54) qui, en cas de montage de la pompe à lubrifiant (1, 10, 70a, 70b, 620) sur chacun des deux côtés, est chaque fois relié au système de conduites (621, 623, 624, 625, 626, 627, 628) prévu à l'intérieur de la transmission, en particulier à une tuyauterie de circuit d'huile,
et/ou **en ce que** les branchements du premier type (56a, 56b) sont des branchements de refoulement et le branchement du deuxième type (36, 54) est un branchement d'aspiration,
et/ou **en ce que** les branchements du premier type sont des branchements d'aspiration et le branchement du deuxième type est un branchement de refoulement.

9. Transmission (15) selon au moins une des revendications précédentes, **caractérisée en ce que** le premier et le deuxième côtés de la transmission (15) sont des côtés opposés de la transmission (15).

10. Transmission (15) selon la revendication 9, **caractérisée en ce que** la pompe à lubrifiant (1, 10, 70a, 70b, 620) est reliée au même arbre (24, 603, 604, 605) en cas de montage sur le premier côté et sur le deuxième côté.

11. Transmission (15) selon au moins une des revendications précédentes, **caractérisée en ce que** la pompe à lubrifiant (1, 10, 70a, 70b, 620) est reliée à la transmission (15) par l'intermédiaire d'un couvercle de carter (16, 21),
sachant que la pompe à lubrifiant (1, 10, 70a, 70b, 620) peut être reliée par le couvercle de carter à une tuyauterie de circuit d'huile interne (621, 623, 624, 625, 626, 627, 628) dans le carter de transmission,
et/ou **en ce que** la pompe à lubrifiant (1, 10, 70a, 70b, 620) peut être reliée par l'intermédiaire d'une tuyauterie externe à un circuit d'huile externe.

12. Transmission (15) selon au moins une des revendications précédentes, **caractérisée en ce que**
les branchements internes (54, 56a, 56b) de la pompe à lubrifiant (1, 10, 70a, 70b, 620) sont dirigés en direction axiale relativement à l'arbre (24, 603, 604, 605) de la pompe à lubrifiant (1, 10, 70a, 70b, 620),
et les branchements externes (34a, 34b, 36) de la pompe à lubrifiant (1, 10, 70a, 70b, 620) sont dirigés en direction radiale relativement à l'arbre (24, 603, 604, 605) de la pompe à lubrifiant (1, 10, 70a, 70b, 620).

13. Gamme de transmissions, comprenant des variantes,
sachant que dans une première variante, une pompe à lubrifiant (1, 10, 70a, 70b, 620) est disposée à une première extrémité d'un arbre (24, 603, 604, 605) de la transmission (15) et est entraînée par l'arbre (24, 603, 604, 605) de la transmission (15),
et que dans une deuxième variante, la pompe à lubrifiant (1, 10, 70a, 70b, 620) est disposée à une deuxième extrémité de l'arbre (24, 603, 604, 605) de la transmission (15) et est entraînée par cet arbre (24, 603, 604, 605) de la transmission (15),
sachant que la pompe à lubrifiant (1, 10, 70a, 70b, 620) est chaque fois raccordée à une tuyauterie de circuit d'huile (621, 623, 624, 625, 626, 627, 628) à l'intérieur de la transmission,
**caractérisée en ce que** la pompe à lubrifiant (1, 10, 70a, 70b, 620) présente un premier branchement du premier type (56a, 56b) et un deuxième branchement du premier type (56a, 56b) qui sont disposés symétriquement l'un par rapport à l'autre de telle sorte que, dans la première variante, la pompe à lubrifiant (1, 10, 70a, 70b, 620) est montée sur un premier côté de la transmission (15), le premier branchement du premier type (56a, 56b) étant relié au système de conduites (621, 623, 624, 625, 626, 627, 628) prévu à l'intérieur de la transmission et le deuxième branchement du premier type (56a, 56b) étant fermé, et que, dans la deuxième variante, la pompe à lubrifiant (1, 10, 70a, 70b, 620) est montée sur un deuxième côté de la transmission (15), le deuxième branchement du premier type (56a, 56b) étant relié à un système de conduites (621, 623, 624, 625, 626, 627, 628) prévu à l'intérieur de la transmission et le premier branchement du premier type (56a, 56b) étant fermé.

14. Gamme de transmissions selon la revendication précédente, **caractérisée en ce que**
dans la première variante ou la deuxième variante, la pompe à lubrifiant (1, 10, 70a, 70b, 620) est prévue sur un couvercle (16, 21) du carter de transmission (601, 602), sachant que le couvercle recouvre un palier d'un arbre (24, 603, 604, 605) de la transmission (15), en particulier de l'arbre d'entrée (603), et que la pompe (1, 10, 70a, 70b, 620) est raccordée par l'intermédiaire du couvercle (16, 21) à une tuyauterie de circuit d'huile à l'intérieur de la transmission,
et sachant que dans une autre variante, la pompe à lubrifiant (1, 10, 70a, 70b, 620) est prévue sur un couvercle (16, 21) du carter de transmission (601, 602), sachant que la pompe à lubrifiant (1, 10, 70a, 70b, 620) est raccordée à un système de tuyauterie externe,
et/ou **en ce que**
dans une variante monobloc de la première ou deuxième variante, le carter de transmission est réalisé en construction monobloc,
dans une variante en deux parties de la première ou deuxième variante, le carter de transmission (601, 602) est réalisé au moins en deux parties,
sachant que dans les deux variantes, il est prévu une tuyauterie de circuit d'huile interne (621,623,624,625,626,627,628),
et sachant que les carters de transmission (601, 602) sont de formes essentiellement identiques, sachant que les différences entre les carters de transmission (601, 602, 627, 628) de la variante monobloc d'une part et de la variante en deux parties d'autre part sont uniquement motivées par l'exécution en deux parties de la variante en deux parties.

15. Procédé de fabrication de variantes d'une gamme de transmissions selon la revendication 13 ou 14, **caractérisé en ce qu'**une pompe à lubrifiant (1, 10, 70a, 70b, 620) est reliée à un arbre de transmission (24, 603, 604, 605) pour former une transmission (15) selon l'une des revendications 1 à 12.
